# EUROPEAN PATENT APPLICATION

(11) **EP 3 618 313 A1**
(43) Date of publication of application: **04.03.2020**
(21) Application number: 18848980.1
(22) Date of filing: 21.08.2018
(51) Int. Cl.: H04B 17/00

(54) **FREQUENCY BAND INDICATING METHOD, FREQUENCY BAND DETERMINING METHOD, TRANSMITTER DEVICE, AND RECEIVER DEVICE**

(30) Priority: 24.08.2017 CN 201710737939
(71) Applicant: Huawei Technologies Co., Ltd., Longgang District Shenzhen, Guangdong 518129 (CN)
(72) Inventor: SHI, Hongzhe, Shenzhen Guangdong 518129 (CN); HAN, Wei, Shenzhen Guangdong 518129 (CN); BI, Xiaoyan, Shenzhen Guangdong 518129 (CN)
(74) Representative: Körber, Martin Hans
(86) International application number: PCT/CN2018/101412
(87) International publication number: WO 2019/037693

(57) **Abstract**

Embodiments of the present invention provide a frequency band indication method, a frequency band determining method, a transmit end device, and a receive end device. The frequency band indication method includes: generating frequency band indication information, where the frequency band indication information is used to indicate a frequency band at which a channel state information-reference signal CSI-RS is located, the frequency band is one of a plurality of frequency bands, and in the plurality of frequency bands, numerologies of at least two frequency bands are different; and sending the frequency band indication information. The present invention further provides a frequency band determining method, a transmit end device, and a receive end device. According to technical solutions provided in the embodiments of the present invention, the frequency band at which the CSI-RS is located is indicated. The foregoing frequency band is one of the plurality of frequency bands, and at least two of the plurality of frequency bands correspond to different numerologies. Therefore, according to the technical solutions provided in the embodiments of the present invention, corresponding channel measurement resources may be allocated for a channel measurement operation at different frequency bands, to implement channel measurement on the foregoing frequency band.

## Description

This application claims priority to Chinese Patent Application No. 201710737939.X, filed with the Chinese Patent Office on August 24, 2017 and entitled "FREQUENCY BAND INDICATION METHOD, FREQUENCY BAND DETERMINING METHOD, TRANSMIT END DEVICE, AND RECEIVE END DEVICE", which is incorporated herein by reference in its entirety.

### TECHNICAL FIELD

Embodiments of the present invention relate to channel measurement technologies, and in particular, to a frequency band indication method, a frequency band determining method, a transmit end device, and a receive end device.

### BACKGROUND

As a next-generation wireless communication standard, a new radio (New Radio, NR) technology supports usage of different numerologies (numerology) at different frequency bands, to support different service transmission scenarios, for example, enhanced mobile broadband (Enhanced Mobile BroadBand, EMBB), ultra-reliability and low-delay communications (Ultra-Reliable and Low-Latency Communication, URLLC), and massive machine-type communications (Massive Machine Type Communications, MMTC). Different numerologies may be represented as different subcarrier spacings (Subcarrier spacing) and different cyclic prefix (Cyclic Prefix, CP) lengths, and the like.

Different numerologies may cause different details of a channel measurement operation at different frequency bands. In this case, how to allocate channel measurement resources for the channel measurement operation at the different frequency bands becomes a problem to be urgently resolved.

### SUMMARY

In view of this, it is necessary to provide a frequency band indication method, which may allocate channel measurement resources for a channel measurement operation at different frequency bands.

Further, a frequency band determining method is provided, which may allocate channel measurement resources for a channel measurement operation at different frequency bands.

Further, a transmit end device is provided, which may allocate channel measurement resources for a channel measurement operation at different frequency bands.

Further, a receive end device is provided, which may allocate channel measurement resources for a channel measurement operation at different frequency bands.

According to a first aspect of embodiments of the present invention, a frequency band indication method is provided. The method includes:
generating frequency band indication information, where the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
sending the frequency band indication information.

According to a second aspect of the embodiments of the present invention, a frequency band determining method is provided. The method includes:
receiving frequency band indication information, where the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
determining, according to the frequency band indication information, the frequency band at which the CSI-RS is located.

According to a third aspect of the embodiments of the present invention, a transmit end device is provided. The transmit end device includes:
generating frequency band indication information, where the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
sending the frequency band indication information.

According to a fourth aspect of the embodiments of the present invention, a receive end device is provided. The receive end device includes:
receiving frequency band indication information, where the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
determining, according to the frequency band indication information, the frequency band at which the CSI-RS is located.

In a possible design of the first aspect, the second aspect, the third aspect, and/or the fourth aspect, the CSI-RS is indicated by using CSI-RS resource indication information, the CSI-RS resource indication information is used to indicate at least one CSI-RS, and the frequency band indication information is included in the CSI-RS resource indication information.

In a possible design of the first aspect, the second aspect, the third aspect, and/or the fourth aspect, the at least one CSI-RS is located at the frequency band.

In a possible design of the first aspect, the second aspect, the third aspect, and/or the fourth aspect, the CSI-RS is indicated by using CSI-RS resource indication information, the CSI-RS resource indication information is used to indicate at least one CSI-RS, the CSI-RS resource indication information is included in CSI-RS resource set indication information, and the CSI-RS resource set indication information includes the frequency band indication information and at least one piece of CSI-RS resource indication information.

In a possible design of the first aspect, the second aspect, the third aspect, and/or the fourth aspect, each CSI-RS associated with the CSI-RS resource set indication information is located at the frequency band.

In a possible design of the first aspect, the second aspect, the third aspect, and/or the fourth aspect, the CSI-RS is indicated by using CSI-RS resource indication information, the CSI-RS resource indication information is used to indicate at least one CSI-RS, the CSI-RS resource indication information is included in CSI-RS resource set indication information, the CSI-RS resource set indication information includes at least one piece of CSI-RS resource indication information, the CSI-RS resource set indication information is included in CSI-RS resource setting information, and the CSI-RS resource setting information includes the frequency band indication information and at least one piece of CSI-RS resource set indication information.

In a possible design of the first aspect, the second aspect, the third aspect, and/or the fourth aspect, each CSI-RS associated with the CSI-RS resource setting information is located at the frequency band.

In a possible design of the first aspect, the second aspect, the third aspect, and/or the fourth aspect, the CSI-RS is indicated by using CSI-RS resource indication information, the CSI-RS resource indication information is used to indicate at least one CSI-RS, the CSI-RS resource indication information is included in CSI-RS resource set indication information, the CSI-RS resource set indication information includes at least one piece of CSI-RS resource indication information, the CSI-RS resource set indication information is included in CSI-RS resource setting information, the CSI-RS resource setting information includes at least one piece of CSI-RS resource set indication information, the CSI-RS resource setting information is associated with CSI report setting information, and the frequency band indication information is included in the CSI report setting information.

In a possible design of the first aspect, the second aspect, the third aspect, and/or the fourth aspect, each CSI-RS associated with the CSI-RS resource setting information is located at the frequency band.

In a possible design of the first aspect, the second aspect, the third aspect, and/or the fourth aspect, the frequency band indication information includes an index of the frequency band.

In a possible design of the first aspect, the second aspect, the third aspect, and/or the fourth aspect, the frequency band indication information includes an indication bitmap of the plurality of frequency bands.

According to another aspect, this application provides a computer readable storage medium. The computer readable storage medium stores an instruction, and when the instruction is run on a computer, the computer is enabled to perform the methods in the foregoing aspects.

According to the technical solutions provided in the embodiments of the present invention, the frequency band at which the CSI-RS is located is indicated. The foregoing frequency band is one of the plurality of frequency bands, and at least two of the plurality of frequency bands correspond to different numerologies. In this way, according to the technical solutions provided in the embodiments of the present invention, corresponding channel measurement resources may be allocated for a channel measurement operation at different frequency bands, to implement channel measurement on the foregoing frequency band.

### BRIEF DESCRIPTION OF DRAWINGS

FIG. 1 is an architectural schematic diagram of indication information related to channel measurement according to an embodiment of the present invention;
FIG. 2 is an example schematic diagram of a wireless communications network according to an embodiment of the present invention;
FIG. 3 is an example flowchart of a frequency band indication method according to an embodiment of the present invention;
FIG. 4A is an architectural schematic diagram of indication information related to channel measurement according to another embodiment of the present invention;
FIG. 4B is an architectural schematic diagram of indication information related to channel measurement according to still another embodiment of the present invention;
FIG. 4C is an architectural schematic diagram of indication information related to channel measurement according to yet another embodiment of the present invention;
FIG. 5 is an example flowchart of a frequency band determining method according to an embodiment of the present invention;
FIG. 6 is a schematic diagram of a logical structure of a transmit end device according to an embodiment of the present invention;
FIG. 7 is a schematic diagram of a logical structure of a receive end device according to an embodiment of the present invention;
FIG. 8 is a schematic diagram of a hardware structure of a transmit end device according to an embodiment of the present invention; and
FIG. 9 is a schematic diagram of a hardware structure of a receive end device according to an embodiment of the present invention.

### DESCRIPTION OF EMBODIMENTS

As described in the background, an NR technology supports usage of different numerologies at different frequency bands, to support different service transmission scenarios, for example, EMBB, URLLC, and MMTC. Different numerologies may be represented as different subcarrier spacings and different cyclic prefix lengths, and the like. Different numerologies may cause different details of a channel measurement operation at different frequency bands. For example, different subcarrier spacings may cause different lengths of corresponding OFDM (Orthogonal Frequency Division Multiplexing, orthogonal frequency division multiplexing) symbols, causing different periods of a channel measurement reference signal (hereinafter referred to as a measurement signal). It can be learned that in an NR system, channel measurement resources used when channel measurement is performed on frequency bands with different numerologies are different.

In an existing communications system, for example, an LTE (Long Term Evolution, long term evolution) system, a single numerology is used. In this case, even if allocated frequency bands are non-contiguous, a same channel measurement resource may be used for channel measurement for the different frequency bands. It can be learned that for different frequency bands, the existing communications system can allocate only the same channel measurement resource. Therefore, adaptive channel measurement resources cannot be allocated for different frequency bands that use different numerologies in the NR technology. Therefore, how to allocate channel measurement resources for a channel measurement operation at different frequency bands becomes a problem to be urgently resolved.

Embodiments of the present invention provide a technical solution, to indicate a frequency band corresponding to a channel measurement resource when the channel measurement resource is allocated, thereby allocating adaptive channel measurement resources for different frequency bands using different numerologies. In short, in the present invention, an adaptive channel measurement resource is allocated for each frequency band, and the frequency band is indicated when the channel resource is allocated. In this way, a communication device that performs channel measurement may perform channel measurement on the frequency band based on the channel measurement resource. The technical solution provided in the embodiments of the present invention is described in detail with reference to the accompanying drawings and specific embodiments. Before the formal description, some technical features that may be involved in the embodiments of the present invention are briefly described.

### Frequency band

Generally, a frequency band is a segment of contiguous spectrum bandwidth in frequency domain. A communications system constructed based on an OFDM technology is used as an example. The frequency band may be a plurality of contiguous subcarriers in frequency domain. For a definition of the frequency band, refer to a definition of a bandwidth part (bandwidth part) in an NR technical standard that is currently in a discussion phase. The bandwidth part may include a group of contiguous physical resource blocks (Physical Resource Block, PRB) in frequency domain, and a bandwidth of the bandwidth part is less than or equal to a maximum bandwidth supported by user equipment (User Equipment, UE). The bandwidth part may include the following attributes, for example, a numerology, a frequency position, and a bandwidth.

Therefore, in the technical solution provided in the embodiments of the present invention, a frequency band is a segment of contiguous spectrum in frequency domain. Particularly, the frequency band is associated with a specific numerology. System bandwidth may be usually divided into a plurality of frequency bands. In the frequency bands, numerologies of at least two frequency bands are different. In a specific implementation process, the frequency band may be specifically represented as a bandwidth part or a group of contiguous PRBs in frequency domain. A specific form of the frequency band is not limited in the embodiments of the present invention.

### Channel measurement resource

The channel measurement resource may be understood as a measurement signal allocated for performing channel measurement. The measurement signal usually occupies a dedicated time-frequency resource, and may be periodically sent, or may be aperiodically triggered based on various events. The measurement signal may be specifically a cell-specific reference signal (Cell-specific Reference Signal, CRS), a channel state information-reference signal (Channel State Information Reference Signal, CSI-RS), or another reference signal used for channel measurement. The channel measurement is to determine a parameter related to channel quality, for example, a signal to interference plus noise ratio (Signal to Interference plus Noise Ratio, SINR), a reference signal received power (Reference Signal Received Power, RSRP), a reference signal received quality (Reference Signal Received Quality, RSRQ), channel state information (Channel State Information, CSI), or a beam (beam) on which a receive end device or a transmit end device is located. In the technical solution provided in the embodiments of the present invention, the channel measurement resource may be a channel measurement resource used to perform channel measurement on a downlink channel, or may be a channel measurement resource used to perform channel measurement on an uplink channel.

In a specific implementation process, for example, a three-level architecture of channel measurement reference signal resource setting-channel measurement reference signal resource set-channel measurement reference signal resource is used to organize and allocate the channel measurement resource, but the embodiments of the present invention are not limited thereto. For easy of description, in the accompanying drawings and descriptions, the channel measurement reference signal resource setting is referred to as a resource setting for short, the channel measurement reference signal resource set is referred to as a resource set for short, and the channel measurement reference signal resource is referred to as a resource for short.

The resource setting may include at least one resource set, and information used to indicate the resource setting may be referred to as resource setting information. In a specific implementation process, the resource setting may refer to an existing CSI-RS resource setting (CSI-RS Resource Setting), or may be specifically implemented as a CSI-RS resource setting. The resource setting information may be specifically implemented as CSI-RS resource setting information.

The resource set may include at least one resource, and information used to indicate the resource set may be referred to as resource set indication information. In a specific implementation process, the resource set may refer to an existing CSI-RS resource set (CSI-RS Resource Set), or may be specifically implemented as a CSI-RS resource set. The resource set indication information may be specifically implemented as CSI-RS resource set indication information.

The resource may include at least one measurement signal, and information used to indicate the resource may be referred to as resource indication information. Specifically, the resource indication information is used to indicate at least one measurement signal, and may specifically include at least one of the following information: a resource identifier, antenna port quantity indication information, measurement signal period indication information, measurement signal pattern indication information, and the like. The antenna port quantity indication information may implicitly indicate an antenna port number, and the measurement signal is usually represented by the antenna port number. In a specific implementation process, the resource may refer to an existing CSI-RS resource configuration (CSI-RS Resource Configuration), or may be specifically implemented as a CSI-RS resource configuration. The resource indication information may be specifically implemented as CSI-RS resource indication information. In addition, information specifically included in the resource indication information is not limited in the embodiments of the present invention, as long as the resource indication information may indicate at least one measurement signal.

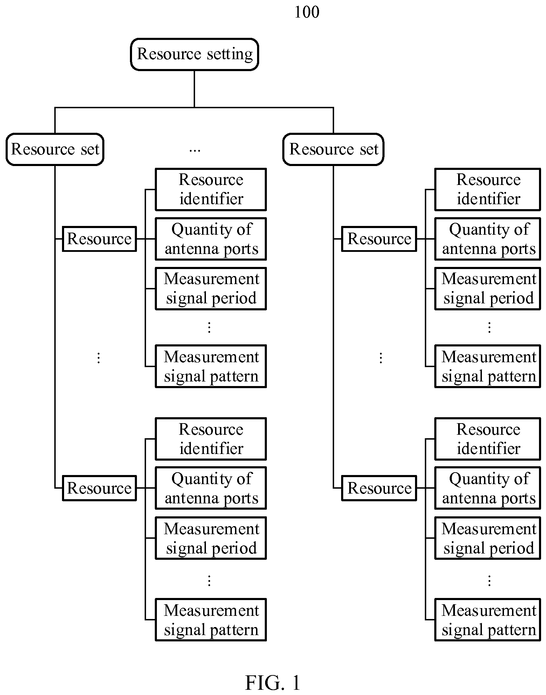

It can be known from the foregoing description that the resource setting information includes at least one piece of resource set indication information, and each resource set indication information includes at least one piece of resource indication information. A relationship among the three types of information may be shown in FIG. 1. In a specific implementation process, the foregoing information may be transmitted by using a radio resource control (Radio Resource Control, RRC) message. It should be understood that an inclusion relationship among the foregoing types of information and frequency band indication information to be described below should be understood as an inclusion relationship in a logical meaning. In a product implementation process, the foregoing types of information may have the foregoing inclusion relationship in a physical information structure, or may not have the foregoing inclusion relationship. For example, at least one type of the foregoing types of information may be transmitted by using a plurality of messages. In addition, corresponding indexes may be configured for both the resource set indication information and the resource indication information, to reduce overheads generated during information transmission. In this case, when the foregoing types of information have the foregoing inclusion relationship in the physical information structure, at least one piece of resource set indication information included in the resource setting information may be understood as including the resource set indication information, and may also be understood as including an index of the resource set indication information. Similarly, at least one piece of resource indication information included in the resource set indication information may be understood as including the resource indication information, and may also be understood as including an index of the resource indication information.

The following describes in detail the technical solution provided in the embodiments of the present invention.

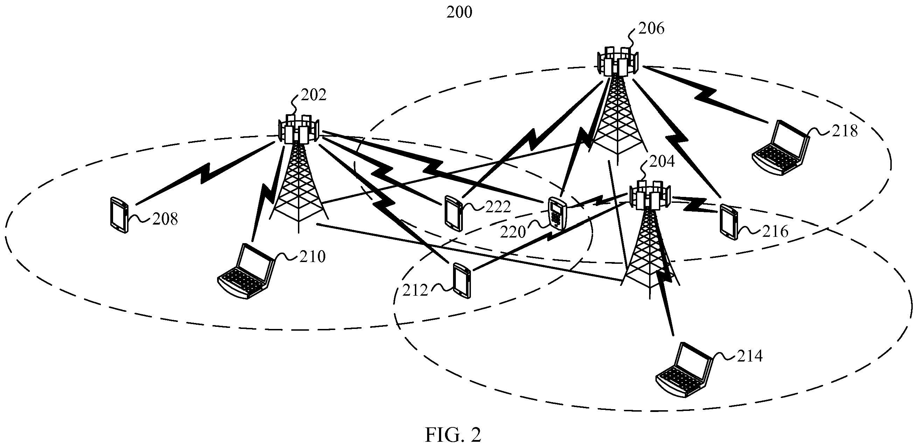

FIG. 2 is an example schematic diagram of a wireless communications network 200 according to an embodiment of the present invention. As shown in FIG. 2, the wireless communications network 200 includes base stations 202 to 206 and terminal devices 208 to 222. The base stations 202 to 206 may communicate with each other on backhaul (backhaul) links (as indicated by straight lines between the base stations 202 to 206). The backhaul link may be a wired backhaul link (such as an optical fiber or a copper cable), or may be a wireless backhaul link (such as a microwave). The terminal devices 208 to 222 may communicate with the corresponding base stations 202 to 206 on radio links (as indicated by broken lines between the base stations 202 to 206 and the terminal devices 208 to 222).

The base stations 202 to 206 are configured to provide a wireless access service for the terminal devices 208 to 222. Specifically, each base station corresponds to a service coverage area (which may also be referred to as a cellular, as indicated by each oval-shaped area in FIG. 2). A terminal device entering the area may communicate with a base station by using a radio signal, to receive a radio access service provided by the base station. Service coverage areas of the base stations may overlap. A terminal device in an overlapping area may receive radio signals from a plurality of base stations. Therefore, these base stations may coordinate with each other, to provide a service for the terminal device. For example, the plurality of base stations may provide the service for the terminal device in the overlapping area by using a coordinated multipoint (Coordinated multipoint, CoMP) technology. For example, as shown in FIG. 2, there is an overlapping area between service coverage areas of the base station 202 and the base station 204, and the terminal device 222 is within the overlapping area. Therefore, the terminal device 222 may receive radio signals from the base station 202 and the base station 204. The base station 202 and the base station 204 may coordinate with each other, to provide a service for the terminal device 222. For another example, as shown in FIG. 2, there is a common overlapping area between service coverage areas of the base station 202, the base station 204, and the base station 206, and the terminal device 220 is within the overlapping area. Therefore, the terminal device 220 may receive radio signals from the base station 202, 204, and 206. The base stations 202, 204, and 206 may coordinate with each other, to provide a service for the terminal device 220.

Depending on a wireless communications technology in use, a base station may also be referred to as a NodeB (NodeB), an evolved NodeB (evolved NodeB, eNodeB), an access point (Access Point, AP), or the like. In addition, according to a size of a coverage area in which a service is provided, a base station may be classified into a macro base station for providing a macro cell (Macro cell), a micro base station for providing a microcell (Pico cell), a femto base station for providing a femto cell (Femto cell), and the like. As the wireless communications technologies keep evolving, another name may be used for a future base station.

The terminal devices 208 to 222 may be various wireless communications devices with a wireless communication function, for example, but not limited to, a mobile cellular phone, a cordless phone, a personal digital assistant (Personal Digital Assistant, PDA), a smartphone, a notebook computer, a tablet computer, a wireless data card, a wireless modem (Modulator demodulator, Modem), or a wearable device such as a smartwatch. As the Internet of things (Internet of Things, IOT) technology emerges, increasingly more devices that originally do not have a communication function are configured with a wireless communications unit to obtain a wireless communication function, for example, but not limited to, a household appliance, a transportation vehicle, a tool device, a service device, and a service facility. In this way, these devices can access a wireless communications network, to accept remote control. This type of device has the wireless communication function because of being configured with a wireless communications unit. Therefore, this type of device is also a kind of wireless communications device. In addition, the terminal devices 208 to 222 may also be referred to as mobile stations, mobile devices, mobile terminals, wireless terminals, handheld devices, clients, and the like.

The base stations 202 to 206 and the terminal devices 208 to 222 each may be configured with a plurality of antennas, to support a MIMO (multiple-input multiple-output, Multiple-Input Multiple-Output) technology. Further, the base stations 202 to 206 and the terminal devices 208 to 222 may not only support a single-user MIMO (Single User MIMO, SU-MIMO) technology, but also support a multi-user MIMO (Multi-User MIMO, MU-MIMO) technology. The MU-MIMO may be implemented based on a space division multiple access (Space Division Multiple Access, SDMA) technology. Configured with a plurality of antennas, the base stations 202 to 206 and the terminal devices 208 to 222 may further flexibly support a single-input single-output (Single Input Single Output, SISO) technology, a single-input multiple-output (Single Input Multiple Output, SIMO) technology, and a multiple-input single-output (Multiple Input Single Output, MISO) technology, to implement various diversity (for example, but not limited to, transmit diversity and receive diversity) and multiplexing technologies. The diversity technology may include, for example, but is not limited to, a transmit diversity (Transmit Diversity, TD) technology and a receive diversity (Receive Diversity, RD) technology. The multiplexing technology may be a spatial multiplexing (Spatial Multiplexing) technology. In addition, the foregoing technologies may further include a plurality of implementation solutions. For example, the transmit diversity technology may include, for example, but is not limited to, diversity manners such as space-time transmit diversity (Space-Time Transmit Diversity, STTD), space-frequency transmit diversity (Space-Frequency Transmit Diversity, SFTD), time switched transmit diversity (Time Switched Transmit Diversity, TSTD), frequency switched transmit diversity (Frequency Switched Transmit Diversity, FSTD), orthogonal transmit diversity (Orthogonal Transmit Diversity, OTD), and cyclic delay diversity (Cyclic Delay Diversity, CDD), and diversity manners obtained by deriving, evolving, and combining the foregoing diversity manners. For example, currently, transmit diversity manners such as space time block coding (Space Time Block Coding, STBC), space frequency block coding (Space Frequency Block Coding, SFBC), and the CDD are used in LTE (Long Term Evolution, Long Term Evolution) standard. A general description of transmit diversity is provided above by using examples. A person skilled in the art needs to understand that, in addition to the foregoing examples, the transmit diversity is further implemented in a plurality of other manners. Therefore, the foregoing descriptions should not be understood as limitations on the technical solutions of the present invention, and it should be understood that the technical solutions of the present invention are applicable to various possible transmit diversity solutions.

In addition, the base stations 202 to 206 and the terminal devices 208 to 222 may communicate with each other by using various wireless communications technologies, for example, but not limited to, a time division multiple access (Time Division Multiple Access, TDMA) technology, a frequency division multiple access (Frequency Division Multiple Access, FDMA) technology, a code division multiple access (Code Division Multiple Access, CDMA) technology, a time division-synchronous code division multiple access (Time Division-Synchronous Code Division Multiple Access, TD-SCDMA) technology, an orthogonal frequency division multiple access (Orthogonal FDMA, OFDMA) technology, a single carrier frequency division multiple access (Single Carrier FDMA, SC-FDMA) technology, and a space division multiple access (Space Division Multiple Access, SDMA) technology, and evolved and derived technologies of these technologies. As radio access technologies (Radio Access Technology, RAT), the foregoing wireless communications technologies are adopted in various wireless communication standards, so that various wireless communications systems (or networks) that are well known today are constructed. These wireless communications systems include, but are not limited to, a global system for mobile communications (Global System for Mobile Communications, GSM), CDMA 2000, wideband CDMA (Wideband CDMA, WCDMA), Wi-Fi defined in a 802.22 series standard, worldwide interoperability for microwave access (Worldwide Interoperability for Microwave Access, WiMAX), long term evolution (Long Term Evolution, LTE), LTE-Advanced (LTE-Advanced, LTE-A), and evolved systems of these wireless communications systems. Unless otherwise specified, the technical solutions provided in the embodiments of the present invention may be applied to the foregoing various wireless communications technologies and wireless communications systems. In addition, the terms "system" and "network" may be interchanged.

It should be noted that the wireless communications network 200 shown in FIG. 2 is merely an example, and is not intended to limit the technical solutions of the present invention. A person skilled in the art should understand that in a specific implementation process, the wireless communications network 200 may further include another device, and a quantity of base stations and a quantity of terminal devices may be further configured based on a specific requirement.

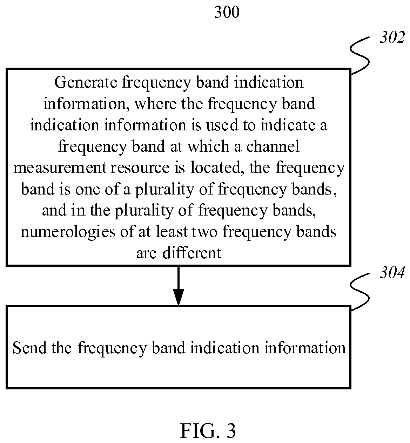

FIG. 3 is an example flowchart of a frequency band indication method 300 according to an embodiment of the present invention. In a specific implementation process, the method 300 may be performed by a transmit end device, and the transmit end device may be, for example, but not limited to, the base stations 202 to 206 shown in FIG. 2.

Step 302. Generate frequency band indication information, where the frequency band indication information is used to indicate a frequency band at which a channel measurement resource is located, the frequency band is one of a plurality of frequency bands, and in the plurality of frequency bands, numerologies of at least two frequency bands are different.

In a specific implementation process, the channel measurement resource may be specifically a CSI-RS or another type of measurement signal.

Step 304. Send the frequency band indication information.

In a specific implementation process, the channel measurement resource may be indicated by using resource indication information. As described above, the resource indication information is used to indicate at least one measurement signal. In this case, the frequency band indication information may be transmitted in the following several implementations.

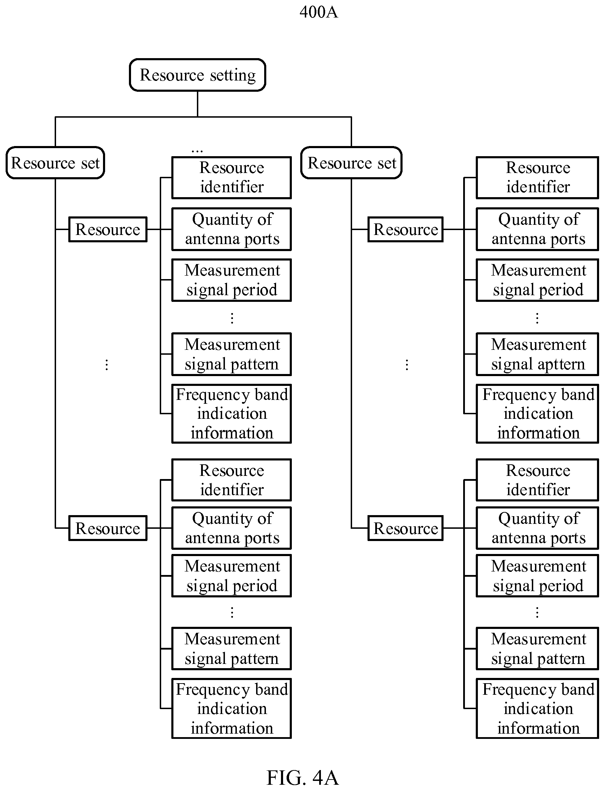

In a first implementation, the frequency band indication information may be included in the resource indication information. Based on the example architectural diagram of indication information related to the channel measurement resource shown in FIG. 1, an example architectural diagram after the frequency band indication information is added according to the first implementation may be shown as an architectural diagram 400A in FIG. 4A. It is not difficult to understand that in the first implementation, the at least one measurement signal indicated by the resource indication information is at the frequency band indicated by the frequency band indication information. It is not difficult to understand that in the first implementation, each piece of resource indication information includes one piece of frequency band indication information, and a frequency band at which a resource indicated by each piece of resource indication information is located may be set according to a specific requirement, in other words, a value of the frequency band indication information is set. The frequency bands indicated by frequency band indication information included in different pieces of resource indication information may be different. In addition, in a specific implementation process, the resource indication information is included in one piece of resource set indication information. The piece of resource set indication information includes at least one piece of resource indication information. Pieces of frequency band indication information included in pieces of resource indication information included in the piece of resource set indication information may be the same. In other words, frequency bands indicated by the pieces of frequency band indication information are the same. Further, the resource indication information is included in one piece of resource set indication information. The piece of resource set indication information includes at least one piece of resource indication information, and the piece of resource set indication information is included in one piece of resource setting information. The piece of resource setting information includes at least one piece of resource set indication information, and pieces of frequency band indication information included in pieces of resource indication information included in pieces of resource set indication information included in the piece of resource setting information may be the same. In other words, frequency bands indicated by the pieces of frequency band indication information are the same. For example, if one piece of resource setting information includes three pieces of resource set indication information, and each piece of resource set indication information includes two pieces of resource indication information, the piece of resource setting information includes six pieces of resource indication information in total, and pieces of frequency band indication information included in the six pieces of resource indication information may be the same. In another implementation, the pieces of frequency band indication information may be different (or at least two pieces of frequency band indication information are different), but frequency bands indicated by the pieces of frequency band indication information are the same. For example, a frequency band indicated by only one piece of the pieces of frequency band indication information is valid, and a frequency band indicated by another piece of frequency band indication information is invalid. In this case, all frequency bands indicated by the pieces of frequency band indication information are the valid frequency bands.

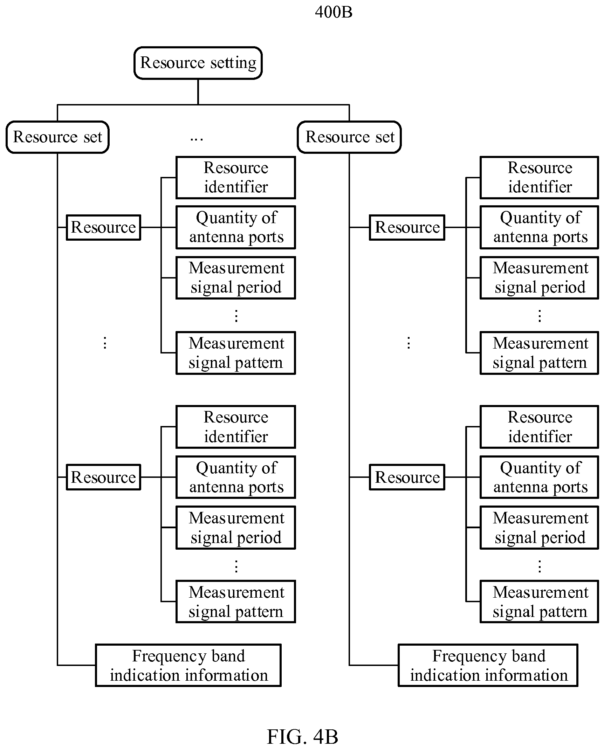

In a second implementation, the resource indication information is included in resource set indication information, and the resource set indication information further includes the frequency band indication information and at least one piece of resource indication information. Based on the example architectural diagram of indication information related to the channel measurement resource shown in FIG. 1, an example architectural diagram after the frequency band indication information is added according to the second implementation may be shown as an architectural diagram 400B in FIG. 4B. It is not difficult to understand that in the second implementation, all measurement signals related to the resource set indication information are at the frequency band indicated by the frequency band indication information. In other words, any measurement signal indicated by any piece of resource indication information included in the resource set indication information is located at the frequency band indicated by the frequency band indication information. It is not difficult to understand that in the second implementation, each piece of resource set indication information includes one piece of frequency band indication information, and a frequency band indicated by the frequency band indication information included in each piece of resource set indication information is set according to a specific requirement. The frequency bands indicated by pieces of frequency band indication information included in different pieces of resource set indication information may be different. In addition, in a specific implementation process, pieces of frequency band indication information included in pieces of resource set indication information included in a same piece of resource setting information may be the same, in other words, frequency bands indicated by the pieces of frequency band indication information are the same. In another implementation, the pieces of frequency band indication information may be different (or at least two pieces of frequency band indication information are different), but frequency bands indicated by the pieces of frequency band indication information are the same. For example, a frequency band indicated by only one piece of the pieces of frequency band indication information is valid, and a frequency band indicated by another piece of frequency band indication information is invalid. In this case, all frequency bands indicated by the pieces of frequency band indication information are the valid frequency bands.

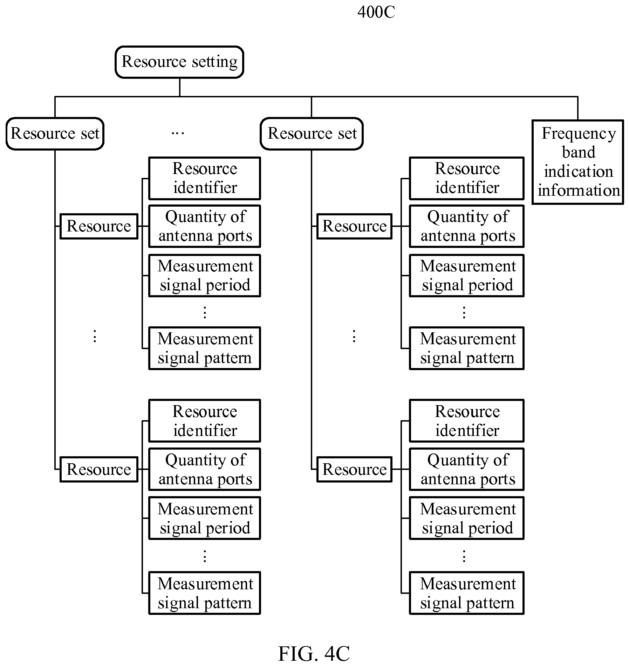

In a third implementation, the resource indication information is included in resource set indication information, and the resource set indication information further includes at least one piece of resource indication information. The resource set indication information is included in resource setting information, and the resource setting information includes the frequency band indication information and at least one piece of resource set indication information. Based on the example architectural diagram of indication information related to the channel measurement resource shown in FIG. 1, an example architectural diagram after the frequency band indication information is added according to the third implementation may be shown as an architectural diagram 400C in FIG. 4C. It is not difficult to understand that in the third implementation, all measurement signals related to the resource setting information are at the frequency band indicated by the frequency band indication information. In other words, any measurement signal indicated by any piece of resource indication information included in any piece of resource set indication information included in the resource setting information is located at the frequency band indicated by the frequency band indication information. In a specific implementation process, the frequency band indicated by the frequency band indication information included in the resource setting information may be set according to a specific requirement. The frequency bands indicated by the pieces of frequency band indication information included in different pieces of resource setting information may be different.

In a fourth implementation, the resource indication information is included in resource set indication information, and the resource set indication information further includes at least one piece of resource indication information. The resource set indication information is included in resource setting information, and the resource setting information includes at least one piece of resource set indication information. The resource setting information is associated with channel measurement report setting information, and the frequency band indication information is included in the channel measurement report setting information. In a specific implementation process, the channel measurement report setting information may be, for example, but not limited to, CSI reporting setting (CSI Reporting Setting) information or another type of information that implements a similar function. It is not difficult to understand that in the fourth implementation, all measurement signals associated with the resource setting information associated with the channel measurement report setting information are located at the frequency band indicated by the frequency band indication information. For a specific meaning, refer to related descriptions in the third implementation.

In the foregoing four implementations, the frequency band indication information is indicated when the channel measurement resource is indicated. Specifically, the frequency band indication information is included in information indicating the channel measurement resource and transmitted. The information indicating the channel measurement resource includes resource indication information, resource set indication information, and resource setting information, or is included in information related to the information indicating the channel measurement resource and is transmitted, for example, channel measurement report setting information. However, in a specific implementation, a mapping relationship between a resource, a resource set, a resource setting, and a channel measurement report setting, and a frequency band may also be preset. In this case, a transmit end device needs to indicate only a channel measurement resource (for example, a resource, a resource set, and a resource setting) and/or a channel measurement report setting, to enable a receive end device to learn, according to an indication sent by the transmit end and the mapping relationship, a frequency band at which the channel measurement resource indicated by the transmit end is located. In this case, the specific channel measurement resource, namely, the resource, the resource set, and the resource setting, may be configured by the transmit end device, may be configured by the transmit end device through negotiating with the receive end device, or may be configured by the receive end device and then notified by the receive end device to the transmit end device. A correspondence between the channel measurement resource and the frequency band may be indicated by the transmit end device (for example, but not limited to, by using RRC signaling) to the receive end device.

Therefore, the frequency band indication method provided in this embodiment of the present invention may further use the following solutions:
generating, by a transmit end device, a channel measurement resource indication, where the channel measurement resource indication is used to indicate a channel measurement resource, and the channel measurement resource corresponds to a frequency band; and
sending, by the transmit end device, the channel measurement resource indication.

The channel measurement resource indication may be the resource indication information, the resource set indication information, the resource setting information, or the channel measurement report setting information. The channel measurement report setting information corresponds to the resource setting information, and the resource setting information corresponds to the frequency band.

In the foregoing solution, the frequency band indication method further includes: sending, by a transmit end device, frequency band configuration information, where the frequency band configuration information includes a correspondence between a channel measurement resource and a frequency band. In a specific implementation process, the frequency band configuration information may be carried by using an RRC message.

In the foregoing solution, a frequency band supported by the receive end device may be notified by the receive end device to the transmit end device in advance.

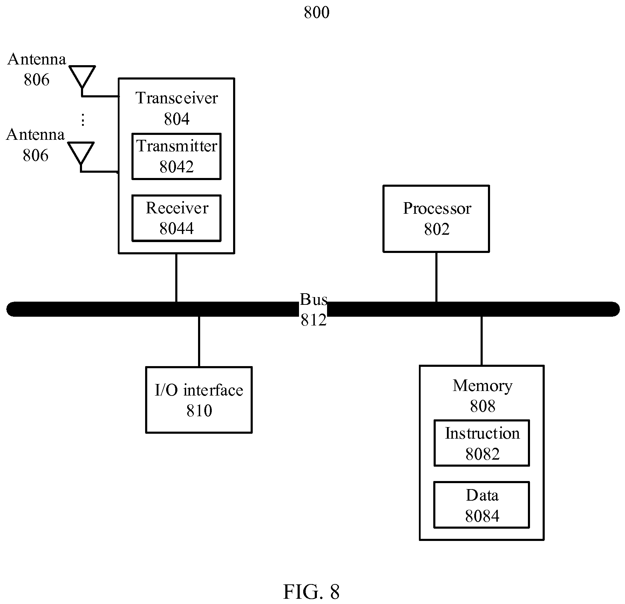

The transmit end device may include a generation module and a transmit module. The generation module is configured to generate a channel measurement resource indication, where the channel measurement resource indication is used to indicate a channel measurement resource, and the channel measurement resource corresponds to a frequency band. The transmit module is configured to send the channel measurement resource indication. In addition, the generation module is further configured to generate frequency band configuration information, where the frequency band configuration information includes a correspondence between the channel measurement resource and the frequency band. The transmit module is further configured to transmit the frequency band configuration information. In addition, the transmit end device may also be implemented by using an architecture shown in FIG. 8 below.

Correspondingly, an embodiment of the present invention further provides a frequency band determining method, including:
receiving, by a receive end device, a channel measurement resource indication, where the channel measurement resource indication is used to indicate a channel measurement resource, and the channel measurement resource corresponds to a frequency band; and
determining, by a receive end device based on the channel measurement resource, the frequency band corresponding to the channel measurement resource indication.

The channel measurement resource indication may be the resource indication information, the resource set indication information, the resource setting information, or the channel measurement report setting information. The channel measurement report setting information corresponds to the resource setting information, and the resource setting information corresponds to the frequency band.

In the foregoing solution, the frequency band determining method further includes: receiving, by the receive end device, frequency band configuration information, where the frequency band configuration information includes a correspondence between the channel measurement resource and the frequency band. In a specific implementation process, the frequency band configuration information may be carried by using an RRC message.

In the foregoing solution, a frequency band supported by the receive end device may be notified by the receive end device to a transmit end device in advance.

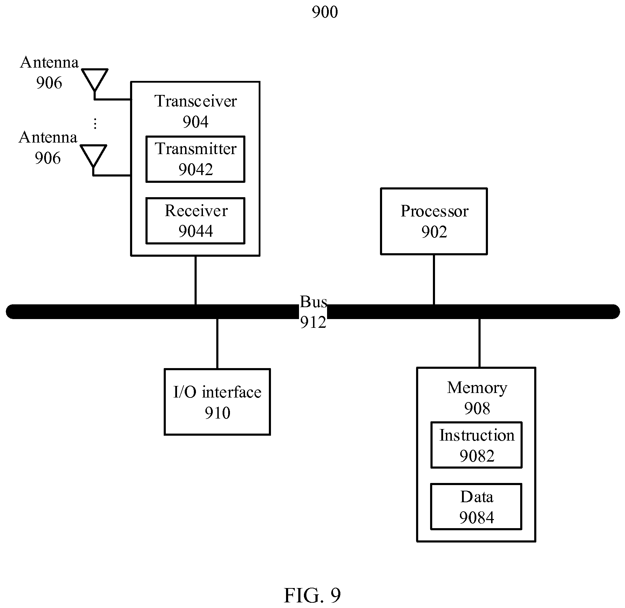

The receive end device may include a receive module and a determining module. The receive module is configured to receive a channel measurement resource indication, where the channel measurement resource indication is used to indicate a channel measurement resource, and the channel measurement resource corresponds to the frequency band. The determining module is configured to determine, based on the channel measurement resource, the frequency band corresponding to the channel measurement resource indication. In addition, the receive module is further configured to receive frequency band configuration information, where the frequency band configuration information includes a correspondence between the channel measurement resource and the frequency band. The receive end device may also be implemented by using an architecture shown in FIG. 9 below.

In the foregoing solution, resources indicated by various channel measurement resource indications have been clearly described above, and details are not described herein again.

In a specific implementation process, the frequency band indication information may include an index of a related frequency band. Alternatively, the frequency band indication information may include an indication bitmap of the plurality of frequency bands. The frequency band indication bitmap includes an indication bit of each of the plurality of frequency bands. A specific value of the indication bit may be set to indicate the frequency band at which the channel measurement resource is located. For example, if system bandwidth is divided into four frequency bands, the frequency band indication bitmap may include four bits, and the four bits are respectively used to indicate the four frequency bands. For each bit, when a value of the bit is 1, it indicates that a frequency band corresponding to the bit is the frequency band at which the channel measurement resource is located. When a value of the bit is 0, it indicates that a frequency band corresponding to the bit is not the frequency band at which the channel measurement resource is located. For example, if values of the four bits are 0010, and the four bits correspond to a first frequency band, a second frequency band, a third frequency band, and a fourth frequency band from left to right, it can be known from the values that because the values of bits corresponding to the first frequency band, the second frequency band, and the fourth frequency band are 0, it indicates that the frequency band at which the channel measurement resource is located is not the first frequency band, the second frequency band, and the fourth frequency band. In this case, because the value of the bit corresponding to the third frequency band is 1, it indicates that the frequency band at which the channel measurement resource is located is the third frequency band.

According to the technical solutions provided in the embodiments of the present invention, a frequency band at which a CSI-RS is located is indicated. The frequency band is one of a plurality of frequency bands, and at least two of the plurality of frequency bands correspond to different numerologies. In this way, according to the technical solutions provided in the embodiments of the present invention, corresponding channel measurement resources may be allocated for a channel measurement operation at different frequency bands, to implement channel measurement on the frequency band.

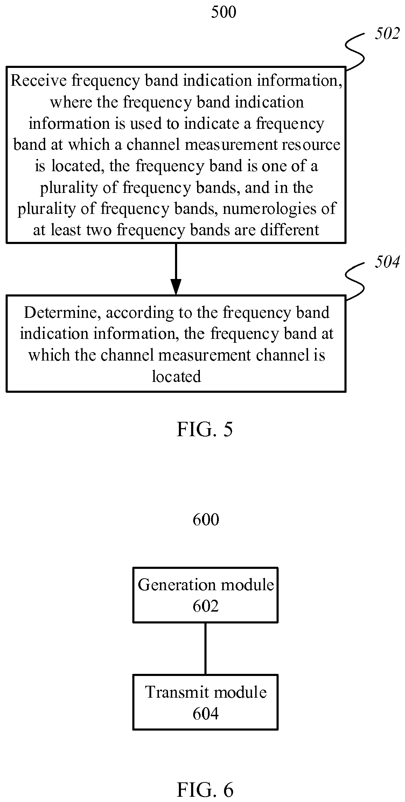

FIG. 5 is an example flowchart of a frequency band determining method 500 according to an embodiment of the present invention. In a specific implementation process, the method 500 may be performed by a receive end device, and the receive end device may be, for example, but not limited to, the terminal devices 208 to 222 shown in FIG. 2.

Step 502. Receive frequency band indication information, where the frequency band indication information is used to indicate a frequency band at which a channel measurement resource is located, the frequency band is one of a plurality of frequency bands, and in the plurality of frequency bands, numerologies of at least two frequency bands are different.

Step 504. Determine, according to the frequency band indication information, the frequency band at which the channel measurement resource is located.

The frequency band determining method 500 shown in FIG. 5 corresponds to the frequency band indication method 300 shown in FIG. 3. A related technical feature has been described in detail with reference to the method 300 shown in FIG. 3. Therefore, details are not described herein again.

The present invention further provides a transmit end device and a receive end device, which are respectively configured to perform the frequency band indication method 300 shown in FIG. 3 and the frequency band determining method 500 shown in FIG. 5. The following describes in detail the transmit end device and the receive end device.

FIG. 6 is a schematic diagram of a logical structure of a transmit end device 600 according to an embodiment of the present invention. In a specific implementation process, the transmit end device 600 may be, for example, but not limited to, the base stations 202 to 206 shown in FIG. 2. As shown in FIG. 6, the transmit end device 600 includes a generation module 602 and a transmit module 604.

The generation module 602 is configured to generate frequency band indication information, where the frequency band indication information is used to indicate a frequency band at which a channel measurement resource is located, the frequency band is one of a plurality of frequency bands, and in the plurality of frequency bands, numerologies of at least two frequency bands are different.

The transmit module 604 is configured to send the frequency band indication information.

The transmit end device 600 is configured to perform the frequency band indication method 300 shown in FIG. 3. A related technical feature has been described in detail with reference to the method 300 shown in FIG. 3. Therefore, details are not described herein again.

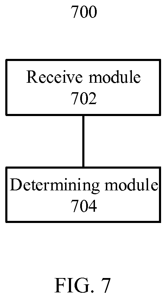

FIG. 7 is a schematic diagram of a logical structure of a receive end device 700 according to an embodiment of the present invention. In a specific implementation process, the receive end device 700 may be, for example, but not limited to, the terminal devices 208 to 222 shown in FIG. 2. As shown in FIG. 7, the receive end device 700 includes a receive module 702 and a determining module 704.

The receive module 702 is configured to receive frequency band indication information, where the frequency band indication information is used to indicate a frequency band at which a channel measurement resource is located, the frequency band is one of a plurality of frequency bands, and in the plurality of frequency bands, numerologies of at least two frequency bands are different.

The determining module 704 is configured, according to the frequency band indication information, to determine the frequency band at which the channel measurement resource is located.

The transmit end device 700 is configured to perform the frequency band determining method 500 shown in FIG. 5. A related technical feature has been described in detail with reference to the method 500 shown in FIG. 5. Therefore, details are not described herein again.

FIG. 8 is a schematic diagram of a hardware structure of a transmit end device 800 according to an embodiment of the present invention. As shown in FIG. 8, the transmit end device 800 includes a processor 802, a transceiver 804, a plurality of antennas 806, a memory 808, an I/O (input/output, Input/Output) interface 810, and a bus 812. The transceiver 804 further includes a transmitter 8042 and a receiver 8044. The memory 808 is further configured to store an instruction 8082 and data 8084. In addition, the processor 802, the transceiver 804, the memory 808, and the I/O interface 810 are in communication connection to each other by using the bus 812. The plurality of antennas 806 are connected to the transceiver 804.

The processor 802 may be a general-purpose processor, for example, but not limited to, a central processing unit (Central Processing Unit, CPU), or may be a dedicated processor, for example, but not limited to, a digital signal processor (Digital Signal Processor, DSP), an application-specific integrated circuit (Application Specific Integrated Circuit, ASIC), and a field programmable gate array (Field Programmable Gate Array, FPGA). In addition, the processor 802 may alternatively be a combination of a plurality of processors. Particularly, in the technical solutions provided in the embodiments of the present invention, the processor 802 may be configured to perform, for example, step 302 in the method 300 shown in FIG. 3, and the operation performed by the generation module 602 in the transmit end device 600 shown in FIG. 6. The processor 802 may be a processor specifically designed for performing the foregoing steps and/or operations, or may be a processor that performs the foregoing steps and/or operations by reading and executing the instruction 8082 stored in the memory 808. The processor 802 may need to use the data 8084 in a process of performing the foregoing steps and/or operations.

The transceiver 804 includes the transmitter 8042 and the receiver 8044. The transmitter 8042 is configured to send a signal by using at least one of the plurality of antennas 806. The receiver 8044 is configured to receive a signal by using at least one of the plurality of antennas 806. Particularly, in the technical solutions provided in the embodiments of the present invention, the processor 8042 may be specifically configured to perform, for example, step 304 in the method 300 shown in FIG. 3, and the operation performed by the transmit module 602 in the transmit end device 600 shown in FIG. 6.

The memory 808 may be various types of storage media, for example, a random access memory (Random Access Memory, RAM), a read-only memory (Read-Only Memory, ROM), a non-volatile RAM (Non-volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 808 is specifically configured to store the instruction 8082 and the data 8084. The processor 802 may perform the foregoing steps and/or operations by reading and executing the instruction 8082 stored in the memory 808, and may need to use the data 8084 in a process of performing the foregoing steps and/or operations.

The I/O interface 810 is configured to: receive an instruction and/or data from a peripheral device, and output an instruction and/or data to the peripheral device.

It should be noted that in a specific implementation process, the transmit end device 800 may further include other hardware devices, which are not enumerated in this specification.

FIG. 9 is a schematic diagram of a hardware structure of a receive end device 900 according to an embodiment of the present invention. As shown in FIG. 9, the receive end device 900 includes a processor 902, a transceiver 904, a plurality of antennas 906, a memory 908, an I/O (input/output, Input/Output) interface 910, and a bus 912. The transceiver 904 further includes a transmitter 9042 and a receiver 9044. The memory 908 is further configured to store an instruction 9082 and data 9084. In addition, the processor 902, the transceiver 904, the memory 908, and the I/O interface 910 are in communication connection to each other by using the bus 912. The plurality of antennas 906 are connected to the transceiver 904.

The processor 902 may be a general-purpose processor, for example, but not limited to, a central processing unit (Central Processing Unit, CPU), or may be a dedicated processor, for example, but not limited to, a digital signal processor (Digital Signal Processor, DSP), an application-specific integrated circuit (Application-Specific Integrated Circuit, ASIC), and a field programmable gate array (Field Programmable Gate Array, FPGA). In addition, the processor 902 may alternatively be a combination of a plurality of processors. Particularly, in the technical solutions provided in the embodiments of the present invention, the processor 902 may be configured to perform, for example, step 504 in the method 500 shown in FIG. 5, and the operation performed by the determining module 704 in the receive end device 700 shown in FIG. 7. The processor 902 may be a processor specifically designed for performing the foregoing steps and/or operations, or may be a processor that performs the foregoing steps and/or operations by reading and executing the instruction 9082 stored in the memory 908. The processor 902 may need to use the data 9084 in a process of performing the foregoing steps and/or operations.

The transceiver 904 includes the transmitter 9042 and the receiver 9044. The transmitter 9042 is configured to send a signal by using at least one of the plurality of antennas 906. The receiver 9044 is configured to receive a signal by using at least one of the plurality of antennas 906. Particularly, in the technical solutions provided in the embodiments of the present invention, the processor 9044 may be specifically configured to perform, by using the at least one of the plurality of antennas 906, step 502 in the method 500 shown in FIG. 5 and the operation performed by the receive module 702 in the receive end device 700 shown in FIG. 7.

The memory 908 may be various types of storage media, for example, a random access memory (Random Access Memory, RAM), a read-only memory (Read-Only Memory, ROM), a non-volatile RAM (Non-volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 908 is specifically configured to store the instruction 9082 and the data 9084. The processor 902 may perform the foregoing steps and/or operations by reading and executing the instruction 9082 stored in the memory 908, and may need to use the data 9084 in a process of performing the foregoing steps and/or operations.

The I/O interface 910 is configured to: receive an instruction and/or data from a peripheral device, and output an instruction and/or data to the peripheral device.

It should be noted that in a specific implementation process, the receive end device 900 may further include other hardware devices, which are not enumerated in this specification.

The technical solutions provided in the embodiments of the present invention may be implemented by using a processor and a transceiver, where the processor is configured to perform various processing operations, for example, but not limited to, operations such as generating, determining, judging, searching, extracting, obtaining, reading, and receiving input to-be-processed data and outputting processed data, and the transceiver is configured to perform operations such as transmitting and receiving. In a specific implementation process, the processor may be implemented in the following manners.

In a first manner, the processor is a dedicated processor. In this case, the processor may further include an interface circuit and a processing circuit. The interface circuit is configured to: receive data that needs to be processed by the processing circuit, and output a processing result of the processing circuit. The processing circuit is configured to perform the foregoing processing operations.

In a second manner, the processor is implemented by using an architecture of a general-purpose processor and a memory. The general-purpose processor is configured to execute processing instructions stored in the memory, and the processing instructions are used to instruct the general-purpose processor to perform the foregoing processing operations. It is not difficult to understand that the processing performed by the general-purpose processor depends on the processing instructions stored in the memory. By modifying the processing instructions in the memory, the general-purpose processor may be controlled to output different processing results.

Further, in the second manner, the general-purpose processor and the memory may be integrated on a same chip. For example, both the general-purpose processor and the memory may be integrated on a processing chip. In addition, the general-purpose processor and the memory may alternatively be disposed on different chips. For example, the general-purpose processor is disposed on a processing chip, and the memory is disposed on a storage chip.

The technical solutions provided in the embodiments of the present invention may also be implemented by using a computer readable storage medium, where the computer readable storage medium stores a processing instruction for implementing the technical solutions of the embodiments of the present invention. The instruction is provided to be read by a general-purpose processing device, to complete the technical solutions provided in the embodiments of the present invention. The foregoing general-purpose processing device should be understood as a processing device that includes necessary hardware components such as a processor and a transceiver. Operations of these hardware components depend on the processing instruction stored in the computer readable storage medium.

All or some of the foregoing embodiments may be implemented by using software, hardware, firmware, or any combination thereof. When being implemented by using software, all or some of the embodiments may be implemented in a form of a computer program product. The computer program product includes one or more computer instructions. When the computer program instructions are loaded and executed on a computer, all or some of the procedures or functions according to the embodiments of the present invention are generated. The computer may be a general-purpose computer, a special purpose computer, a computer network, or another programmable apparatus. The computer instructions may be stored in a computer readable storage medium or transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any available medium accessible to the computer, or a data storage device, such as a server or a data center integrating one or more available media. The usable medium may be a magnetic medium (for example, a floppy disk, a hard disk, or a magnetic tape), an optical medium (for example, DVD), a semiconductor medium (for example, a solid state disk (SSD)), or the like.

To sum up, the foregoing descriptions are merely embodiments of the present invention, but are not intended to limit the protection scope of the present invention. Any modification, equivalent replacement, or improvement made without departing from the spirit and principle of the present invention shall fall within the protection scope of the present invention.

## Claims

1. A frequency band indication method, comprising:
generating frequency band indication information, wherein the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
sending the frequency band indication information.

2. A frequency band determining method, comprising:
receiving frequency band indication information, wherein the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
determining, according to the frequency band indication information, the frequency band at which the CSI-RS is located.

3. The method according to claim 1 or 2, wherein the CSI-RS is indicated by using CSI-RS resource indication information, the CSI-RS resource indication information is used to indicate at least one CSI-RS, and the frequency band indication information is comprised in the CSI-RS resource indication information.

4. The method according to claim 3, wherein the at least one CSI-RS is located at the frequency band.

5. The method according to claim 1 or 2, wherein the CSI-RS is indicated by using CSI-RS resource indication information, the CSI-RS resource indication information is used to indicate at least one CSI-RS, the CSI-RS resource indication information is comprised in CSI-RS resource set indication information, and the CSI-RS resource set indication information comprises the frequency band indication information and at least one piece of CSI-RS resource indication information.

6. The method according to claim 5, wherein each CSI-RS associated with the CSI-RS resource set indication information is located at the frequency band.

7. The method according to claim 1 or 2, wherein the CSI-RS is indicated by using CSI-RS resource indication information, the CSI-RS resource indication information is used to indicate at least one CSI-RS, the CSI-RS resource indication information is comprised in CSI-RS resource set indication information, the CSI-RS resource set indication information comprises at least one piece of CSI-RS resource indication information, the CSI-RS resource set indication information is comprised in CSI-RS resource setting information, and the CSI-RS resource setting information comprises the frequency band indication information and at least one piece of CSI-RS resource set indication information.

8. The method according to claim 7, wherein each CSI-RS associated with the CSI-RS resource setting information is located at the frequency band.

9. The method according to claim 1 or 2, wherein the CSI-RS is indicated by using CSI-RS resource indication information, the CSI-RS resource indication information is used to indicate at least one CSI-RS, the CSI-RS resource indication information is comprised in CSI-RS resource set indication information, the CSI-RS resource set indication information comprises at least one piece of CSI-RS resource indication information, the CSI-RS resource set indication information is comprised in CSI-RS resource setting information, the CSI-RS resource setting information comprises at least one piece of CSI-RS resource set indication information, the CSI-RS resource setting information is associated with CSI report setting information, and the frequency band indication information is comprised in the CSI report setting information.

10. The method according to claim 9, wherein each CSI-RS associated with the CSI-RS resource setting information is located at the frequency band.

11. The method according to any one of claims 1 to 10, wherein the frequency band indication information comprises an index of the frequency band.

12. The method according to any one of claims 1 to 10, wherein the frequency band indication information comprises an indication bitmap of the plurality of frequency bands.

13. A transmit end device, comprising:
a generation module, configured to generate frequency band indication information, wherein the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
a transmit module, configured to send the frequency band indication information.

14. A receive end device, comprising:
a receive module, configured to receive frequency band indication information, wherein the frequency band indication information is used to indicate a frequency band at which a channel state information-reference signal CSI-RS is located, the frequency band is one of a plurality of frequency bands, and in the plurality of frequency bands, numerologies of at least two frequency bands are different; and
a determining module, configured to determine, according to the frequency band indication information, the frequency band at which the CSI-RS is located.

15. A computer readable storage medium, wherein the computer readable storage medium stores an instruction, and when the instruction is run on a computer, the computer is enabled to perform the method according to any one of claims 1 to 12.
